(19)

**Europäisches Patentamt**

**European Patent Office**

**Office européen des brevets**

(11) **EP 2 532 718 B1**

(12) **EUROPEAN PATENT SPECIFICATION**

(45) Date of publication and mention
of the grant of the patent:
**15.04.2020 Bulletin 2020/16**

(21) Application number: **11737195.5**

(22) Date of filing: **31.01.2011**

(51) Int Cl.:
*C09D 11/00* (2014.01)   *B41J 2/01* (2006.01)
*B41M 5/00* (2006.01)   *C09D 11/10* (2014.01)
*C09D 11/322* (2014.01)

(86) International application number:
**PCT/JP2011/051877**

(87) International publication number:
**WO 2011/093486 (04.08.2011 Gazette 2011/31)**

(54) **INK COMPOSITION FOR INKJET RECORDING**

TINTENZUSAMMENSETZUNG FÜR TINTENSTRAHLAUFZEICHNUNG

COMPOSITION D'ENCRE POUR IMPRESSION PAR JET D'ENCRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.02.2010 JP 2010020188**

(43) Date of publication of application:
**12.12.2012 Bulletin 2012/50**

(73) Proprietor: **DIC Corporation
Tokyo 174-8520 (JP)**

(72) Inventors:
 • **MISAWA Soetrisno
 Kitaadachi-gun
 Saitama 362-8577 (JP)**

 • **OKADA Shinichi
 Kitaadachi-gun
 Saitama 362-8577 (JP)**

(74) Representative: **Beckmann, Claus et al
Kraus & Weisert
Patentanwälte PartGmbB
Thomas-Wimmer-Ring 15
80539 München (DE)**

(56) References cited:
**EP-A1- 1 849 840   EP-A1- 1 854 853
WO-A1-98/10025   JP-A- 2004 131 586
JP-A- 2005 047 076   JP-A- 2005 336 336
JP-A- 2006 342 323**

**Description**

Technical Field

The present invention relates to an aqueous ink composition for inkjet recording, the aqueous ink composition containing a pigment, an anionic group-containing resin, a humectant, and a basic compound, and in particular, to an aqueous ink composition for inkjet recording, in which the incorporation of a binder resin and an additional additive component in the aqueous ink composition improves the gloss, scratch resistance, and rub resistance of an image formed on a recording medium.

Background Art

In recent years, the image quality of printed images formed by inkjet recording methods has been significantly improved. Thus, inkjet recording methods have been increasingly employed in consumer and industrial fields. In particular, in the consumer field, inkjet recording methods with aqueous ink are mainly employed in order to reduce environmental load.

Dyes have been mainly used for inkjet recording with aqueous inks in the past. Also in the consumer field, printed matter has recently been required to have higher storage stability. Aqueous inks containing pigments, serving as colorants, with excellent lightfastness and gas resistance have been increasingly used. Properties, such as lightfastness and gas resistance, are necessary not only for industrial applications, but also for business documents required to have good storage stability. Also in the field of compact printers for SOHO, inkjet recording printers with aqueous inks for inkjet recording containing pigments start to spread.

In the case of inks containing pigments, pigments are required to be sufficiently and stably dispersed in aqueous media, compared with inks containing dyes as colorants. It is important to ensure the storage stability of inks.

In the case where images are formed with such inks on recording media having receiving layers, when colorants are dyes, dyes dissolved in inks penetrate into receiving layers. When colorants are pigments dispersed in medium, pigments do not penetrate into receiving layers but are deposited on surfaces of recording media. For inks containing pigment colorants, color developability of colorants is different from that of inks containing dyes, thus leading to a low print density. For the reasons described above, the fixability of colorants is low. The rub resistance tends to be low. The nonuniformity of surface properties due to the deposition of pigments causes a reduction in gloss. Thus, aqueous inks containing pigment colorants for inkjet recording are required to have satisfactory dispersion properties, excellent ejection properties, good storage stability, satisfactory gloss, good print density, and improved rub resistance in order to provide a high-quality image-forming function. In particular, in the case where an image is formed on specialized high-gloss photo paper used to print a photographic image, it is very important to ensure these properties.

For conventional ink compositions, at least 1 hour after forming an image, acceptable rub resistance is provided to some extent. However, rub resistance immediately after recording is insufficient. In the case of usual printed matter, for example, surfaces of images immediately after printing may be damaged when sheets overlap one another or when sheets are handled immediately after printing. It is thus necessary to improve the rub resistance of the print surfaces.

To meet the demands for aqueous inks containing pigment colorants for inkjet recording, disclosed is an ink composition containing a pigment and a pigment derivative which are covered with a styrene-acrylic acid-based copolymer having a specific composition, the ink composition having excellent storage stability and providing satisfactory ejection stability, high gloss, and high image density (see PTL 1). However, the rub resistance and the scratch resistance of a printed image are not sufficient.

An ink composition containing a pigment, a styrene-acrylic-based binder resin, and a wax is disclosed (see PTL 2). The use of the ink composition results in printed matter having excellent rub resistance and scratch resistance. Although the use of the binder resin and the wax improves the rub resistance and the scratch resistance, the scratch resistance immediately after printing is still insufficient. Thus, for example, when a sheet immediately after printing overlaps another sheet during or after printing, an image may be damaged. Furthermore, the gloss of the image is not sufficient. Thus, further improvement in image quality is required.

It is disclosed that the use of an ink composition containing a pigment and two or more waxes having different particle sizes results in printed matter having high image density and gloss and results in excellent rub resistance of a printed image (see PTL 3).

A reduction in the gloss properties of a printed image due to the addition of wax can be inhibited by the use of the two or more waxes having different particle sizes. In this case, the rub resistance can also be improved. However, the inhibition of the reduction in gloss properties is not adequate, and the scratch resistance immediately after printing is still insufficient.

The development of rub resistance immediately after printing by the addition of wax depends on the drying rate of a film formed by the deposition of an ink composition on a recording medium. In the case of a low drying rate of the film, when a strong external force is locally applied to an image, the wax is detached together with a colorant before completely fixed to the recording medium, thereby causing a significant reduction in image quality. Thus, an ink composition that provides improved scratch resistance immediately after printing is required.

Disclosed is an aqueous pigment dispersion containing a pigment, a (meth)acrylate resin, and a urethane resin, the urethane resin being in the form of urethane resin particles having an average dispersed particle size of 1 to 45 nm (see PTL 4). It would seem that the aqueous pigment dispersion is excellent in storage stability and can form a colored film having excellent lightfastness and rub resistance. Disclosed is an aqueous pigment dispersion containing a styrene-acrylic-based monomer prepared by the copolymerization of a styrene-based monomer, a (meth)acrylate-based monomer and (meth)acrylic acid, an acid group-containing polyurethane, and a water-soluble salt of aminosulfonic acid (see PTL 5). It would seem that the aqueous pigment dispersion exhibits excellent rub resistance and dispersion stability.

However, colored films formed from these urethane resin-containing aqueous pigment dispersions do not always have sufficient rub resistance immediately after forming the films.

EP 1 849 840 A1 describes a black ink composition by which a recorded matter in which a fine surface defect on a recorded matter is effectively suppressed, can be obtained. For this object, the black ink composition contains water, carbon black, and a water-soluble polyurethane resin, wherein when a content of carbon black is not less than 0.4% by weight and less than 1.5% by weight, a content of a solid matter of the water-soluble polyurethane resin is not less than 0.67-fold and not more than 2.5-fold a content of the carbon black and, when a content of the carbon black is less than 0.4% by weight, a content of a solid matter of the water-soluble polyurethane resin is not less than 7.5-fold a content of the carbon black.

EP 1 854 853 A1 describes an orange ink composition for inkjet recording high in color saturation and gloss, while having long storage stability and jet stability, and also an aqueous pigment dispersion mainly composing the ink composition. The aqueous pigment dispersion which contains a styrene-acrylic acid copolymer containing 60% by mass or more of styrene-based monomer units with respect to total monomer components and having an acid value of 130 to 200 and a weight-average molecular weight of 6,000 to 40,000, an alkali metal hydroxide, a wetting agent and C. I. Pigment Red 168 is excellent in storage stability and high in gloss. Further, an ink composition for inkjet recording mainly composing the aqueous pigment dispersion reflects an excellent dispersibility of the aqueous pigment dispersion, thereby having a favorable jettability and excellent light fastness.

WO 98/10025 A1 describes an aqueous jet ink composition suitable for printing scratch and rub resistant identifying marks on substrates such as paper, glass, metal, or plastic substrates comprising water, a colorant, a binder resin, and a wax. An example of the colorant is carbon black. An example of the binder resin is a styrene-acrylic copolymer. An example of a suitable wax is a polyethylene or a polytetrafluoroethylene wax. The jet ink composition may further contain organic solvents, defoamers, conductivity agents, and biocides. Also describes are a process for preparing the jet ink composition and a process for producing identifying marks on the substrates.

Citation List

Patent Literature

PTL 1: Japanese Unexamined Patent Application Publication No. 2004-043791

PTL 2: Japanese Unexamined Patent Application Publication No. 2000-517370

PTL 3: Japanese Unexamined Patent Application Publication No. 2007-277290

PTL 4: Japanese Unexamined Patent Application Publication No. 2004-131586

PTL 5: Japanese Unexamined Patent Application Publication No. 2005-336336

Summary of Invention

Technical Problem

It is an object of the present invention to provide an aqueous ink composition for inkjet recording, the aqueous ink composition having satisfactory dispersion properties and ejection properties, excellent scratch resistance and rub resistance, and high color developability and gloss. Another object of the invention is to provide a method for producing the aqueous ink composition and a method for forming an image by inkjet recording with the aqueous ink composition.

Solution to Problem

To overcome the foregoing problems, the present invention provides the aqueous ink composition for inkjet recording defined in claim 1, the aqueous ink composition containing a pigment (a), an anionic group-containing resin (b), a humectant (c), a basic compound (d), a water-dispersible urethane resin (e), and a polyolefin wax (f). The invention also provides the method for producing an aqueous ink composition defined in claim 9 and the method for forming an image defined in claim 12. Preferred embodiments of the invention are defined in the dependent claims.

The aqueous ink composition for inkjet recording according to the present invention contains the polyolefin wax. Thus, the polyolefin wax is present on a colored film formed by the deposition of the ink composition on a recording medium. Even if a strong external force is applied to an image, protruding portions of the polyolefin wax are deformed by the external force to spread on a surface of the film, thereby suppressing abrasion; hence, it is possible to provide printed matter having improved scratch resistance and rub resistance of a printed image. Usually, irregularities arisen from the polyolefin wax on the surface of the recording medium cause a reduction in gloss. In the present invention, however, the urethane resin serving as a binder resin covers the irregularities on the surface of the recording medium to smooth the irregularities, thus enabling improvement in gloss while maintaining high scratch resistance and rub resistance.

The urethane resin has satisfactory film formability. A difference in height between the protruding polyolefin wax and a portion around the wax is reduced owing to a urethane resin film, so that the irregularities are smoothed. In this process, the wax is tightly bonded to the surface of the recording medium. Thus, the rub resistance is improved immediately after forming the film.

Advantageous Effects of Invention

An ink composition for inkjet recording according to the present invention contains a polyolefin wax (f) and a water-dispersible urethane resin (e) serving as a binder resin. The binder resin covers irregularities of the polyolefin wax (f) on a surface of a recording medium to smooth the irregularities, thereby improving the gloss while maintaining the rub resistance.

In the ink composition according to the present invention, the water-dispersible urethane resin (e) has excellent film formability and thus firmly holds the polyolefin wax (f). In particular, a film formed on the surface of the recording medium has a high drying rate immediately after printing, thus improving the fixation of the polyolefin wax (f) for a short time and resulting in printed matter having excellent scratch resistance and rub resistance of an image immediately after printing. Therefore, the ink composition can be used for various recording media, such as recording media having low absorbability, and highspeed printing applications.

The aqueous ink composition for inkjet recording according to the present invention contains the water-dispersible urethane resin (e) and the polyolefin wax (f) and thus has satisfactory scratch resistance and rub resistance, excellent color developability, and high gloss.

Description of Embodiments

An aqueous ink composition for inkjet recording of the present invention contains a pigment (a), an anionic group-containing resin (b), a humectant (c), a basic compound (d), a water-dispersible urethane resin (e), and a polyolefin wax (f).

Various raw materials used for the aqueous ink composition for inkjet recording of the present invention will be described in detail below. Furthermore, a method for producing the aqueous ink composition for inkjet recording of the present invention with the raw materials, the scope of application of the aqueous ink composition for inkjet recording, and so forth will be sequentially described in detail below.

(Wax)

As the polyolefin wax (f) used in the present invention, polyolefin waxes usually added to paint in order to impart lubricity to a surface of a coating film may be used separately or in combination as a mixture of two or more. Polyolefin waxes are basically prepared by the polymerization of monomers each containing 50% by mass or more olefinic hydrocarbon serving as a main component. Polyolefin waxes include polyethylene waxes, polypropylene waxes, and polybutylene waxes prepared by the polymerization of single monomers, such as ethylene, propylene, and butylene; and copolymers prepared from the monomers. Modified polyolefin waxes may also be used which are modified products prepared with copolymerization components other than olefinic hydrocarbons and prepared by the introduction of various functional groups, the concentration of the copolymerization components being less than 50% by mass with respect to the total amount of all monomer constituents and serving as minor components. Examples of modified polyolefin waxes include styrene-modified polyolefin waxes on which styrene compounds and so forth serving as copolymerization components are grafted; and acid-modified polyolefin waxes prepared by the copolymerization of carboxylic acids, such as acrylic acid, methacrylic acid, maleic acid, and fumaric acid. Oxidized polyolefin waxes may also be used into which, for example, COOH and OH groups are introduced by the oxidation of polyolefin waxes with air or ozone.

The olefinic hydrocarbon, which serves as a main component, for the preparation of the polyolefin wax (f) used in the present invention preferably contains one or two or more compounds selected from ethylene, propylene, and butylene; more preferably ethylene alone, propylene alone, butylene alone, or ethylene and either propylene or butylene; even more preferably ethylene alone, propylene alone, butylene alone; and still more preferably ethylene alone.

Preferably, the polyolefin wax (f) can be in the form of particles each having a particle size, which varies depending on the wax, in a coating film to be formed when the aqueous ink composition is ejected and deposited on a recording surface. Thus, the polyolefin wax used in the present invention is preferably an emulsion wax that can provide a stable aqueous suspension and an aqueous emulsion. To improve the rub resistance of a printed coating film when the polyolefin wax (f) is added to the ink composition for inkjet recording, the polyolefin wax (f) preferably has a volume-average particle size of 40 to 1000 nm. A volume-average particle size exceeding 40 nm easily provides the effect of rub resistance. At a volume-average particle size of less than 1000 nm, it is easily possible to inhibit a significant reduction in the gloss of a printed coating film while providing the effect of rub resistance.

In this specification, the particle size of the polyolefin wax refers to a volume-average particle size measured by a dynamic light scattering method. Specifically, the particle size indicates a value obtained by diluting a wax particle dispersion to 200 to 10000 times with ion-exchanged water and performing measurement with a measuring instrument, such as Microtrac UPA150EX (manufactured by Nikkiso Co., Ltd.) at a cell temperature of 25°C.

The melting point or ring and ball softening point of the polyolefin wax (f) used in the present invention is 80°C or higher, preferably 110°C or higher, and particularly preferably 110°C to 160°C because the wax remains easily in the form of particles in an ink film bonded on a recording surface.

The polyolefin wax (f) may be prepared by the polymerization of polyolefin, pyrolysis of polyolefin for general molding so as to reduce the molecular weight of the polyolefin, or oxidation of the polyolefin. Alternatively, a commercially available polyolefin wax may also be used. Specific examples thereof include CHEMIPEARL series, such as CHEMIPEARL W900 (polyolefin wax, particle size: 680 nm, ring and ball softening point: 132°C, manufactured by Mitsui Chemicals, Inc.), AQUACER series, such as AQUACER 552 (polyolefin wax, particle size: 90 nm, melting point: 130°C, manufactured by BYK Japan KK.), and FINEDIC series, such as FineTex PE-140E (polyolefin wax, particle size: 100 nm, manufactured by DIC Corporation).

A preferred amount of the polyolefin wax (f) used in the present invention depends on the particle size of the wax. In the case of the wax with a large particle size, even if a small amount of the wax is added, the effect of the rub resistance is easily provided. In the case of the wax with a small particle size, it is necessary to add a large amount of the wax in order to provide the effect of the rub resistance.

Regarding the amount of the polyolefin wax (f) added, the value of ($Cf \times Df$) is in the range of 3 to 100 and preferably 5 to 100, wherein $Cf$ represents the polyolefin wax (f) content (percent by mass) with respect to the total weight of the ink composition, and $Df$ represents the volume-average particle size (nm). When the value of ($Cf \times Df$) is 3 or more, the effect of the rub resistance is easily provided. When the value of ($Cf \times Df$) is 100 or less, the effect of the rub resistance is provided without significant reductions in the gloss of the printed coating film or ejection stability.

(Water-Dispersible Urethane Resin)

The water-dispersible urethane resin (e) used in the present invention is an anionic urethane resin prepared from an organic polyisocyanate, at least one anionic group-containing polyol selected from polyester polyols, polyether polyols, and polycarbonate polyols each having a hydroxyl value of 10 to 350, and optionally a polyamine and/or a polyol having a molecular weight of 300 or less.

Examples of the organic polyisocyanate that may be used include aromatic polyisocyanates, such as 4,4'-diphenylmethane diisocyanate, 2,4'-diphenylmethane diisocyanate, carbodiimide-modified diphenylmethane diisocyanate, crude diphenylmethane diisocyanate, phenylene diisocyanate, tolylene diisocyanate, and naphthalene diisocyanate; and aliphatic polyisocyanates and polyisocyanates containing alicyclic structures, such as hexamethylene diisocyanate, lysine diisocyanate, cyclohexane diisocyanate, isophorone diisocyanate, dicyclohexylmethane diisocyanate, xylylene diisocyanate, and tetramethylxylylene diisocyanate. Among these compounds, a non-yellowing aliphatic polyisocyanate is preferably used.

As the anionic group-containing polyol, an anionic polyol containing at least one selected from sulfo group-containing polyols and carboxyl group-containing polyols may be used.

Examples of the carboxyl group-containing polyols that may be used include 2,2'-dimethylolpropionic acid, 2,2'-dimethylolbutanoic acid, 2,2'-dimethylolbutyric acid, and 2,2'-dimethylolvaleric acid. Among these compounds, 2,2'-dimethylolpropionic acid is preferably used. Furthermore, carboxyl group-containing polyester polyols prepared by the reaction of the carboxyl group-containing polyols and various polycarboxylic acids may be used.

Example of the sulfo group-containing polyols that may be used include polyester polyols prepared by the reaction between dicarboxylic acids, such as 5-sulfoisophthalic acid, sulfoterephthalic acid, 4-sulfophthalic acid, and 5-[4-sulfophenoxy]isophthalic acid, and salts thereof; and low-molecular-weight polyols, such as ethylene glycol, diethylene glycol, propylene glycol, dipropylene glycol, and 1,2-propanediol.

As the water-dispersible urethane resin (e) used in the present invention, a water-dispersible anionic urethane resin prepared from an organic polyisocyanate and a polyol which has a hydroxyl value of 10 to 350, which is selected from polyester polyols, polyether polyols, and polycarbonate polyols, and which contains at least one anionic group, is preferred. A water-dispersible anionic urethane resin having an acid value of 20 to 100 with respect to the resin solid content is preferred in view of the storage stability of ink. In particular, a water-dispersible anionic urethane resin having an acid value of 20 to 60 with respect to the resin solid content is more preferred.

The anionic urethane resin preferably has a weight-average molecular weight of 20,000 to 100,000 and more preferably 30,000 to 60,000 from the viewpoint of achieving a good balance between the ink ejection properties and rub resistance of the anionic urethane resin.

Examples of the polyamine include diamines, such as ethylenediamine, 1,2-propanediamine, 1,6-hexamethylenediamine, piperazine, 2,5-dimethylpiperazine, isophorone diamine, 4,4'-dicyclohexylmethanediamine, 3,3'-dimethyl-4,4'-dicyclohexylmethanediamine, and 1,4-cyclohexanediamine; diamines each having one primary amino group and one secondary amino group, such as N-hydroxymethylaminoethylamine, N-hydroxyethylaminoethylamine, N-hydroxypropylaminopropylamine, N-ethylaminoethylamine, and N-methylaminopropylamine; polyamines, such as diethylenetriamine, dipropylenetriamine, and triethylenetetramine; hydrazines, such as hydrazine, N,N'-dimethylhydrazine, and 1,6-hexamethylenebishydrazine; dihydrazides, such as succinic acid dihydrazide, adipic acid dihydrazide, glutaric acid dihydrazide, sebacic acid dihydrazide, and isophthalic acid dihydrazide; and semicarbazides, such as $\beta$-semicarbazidopropionic acid hydrazide, 3-semicarbazidopropyl carbazate, and semicarbazido-3-semicarbazidomethyl-3,5,5-trimethylcyclohexane. They may be used alone or in combination of two or more.

Examples of the polyol include glycols, such as ethylene glycol, diethylene glycol, triethylene glycol, propylene glycol, 1,3-propanediol, 1,3-butanediol, 1,4-butanediol, hexamethylene glycol, saccharose, methylene glycol, glycerol, and sorbitol; phenols, such as bisphenol A, 4,4'-dihydroxydiphenyl, 4,4'-dihydroxydiphenyl ether, 4,4'-dihydroxydiphenyl sulfone, hydrogenated bisphenol A, and hydroquinone. They may be used alone or in combination of two or more.

The water-dispersible urethane resin (e) used in the present invention is preferably in the range of 0.2% to 5% by mass with respect to the total amount of the ink composition. That is, the water-dispersible urethane resin content Ce percent by mass of the total weight of the ink composition is preferably in the range of 0.2 to 5 and more preferably 0.5 to 2. A water-dispersible urethane resin content Ce percent by mass of 0.2 or more easily provides the effect of improving the gloss. A water-dispersible urethane resin content Ce percent by mass of 5 or less easily provides the effect of improving the film formability.

(Pigment)

The pigment (a) used in an aqueous pigment dispersion of the present invention is carbon black. This pigment may be surface-treated to have self-dispersing properties in an aqueous medium.

(Humectant)

As the humectant (c) used in an aqueous ink of the present invention, commonly known humectants suitable for inkjet recording may be used. Examples of the humectant include polyhydric alcohols, such as ethylene glycol, diethylene glycol, triethylene glycol, polyethylene glycol, polypropylene glycol, and glycerol; polyhydric alcohol alkyl ethers, such as ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether, and propylene glycol monoethyl ether; polyhydric alcohol aryl ethers, such as ethylene glycol monophenyl ether and ethylene glycol monobenzyl ether; polyoxyalkylene adducts of glycerol, such as polyethylene oxide adducts of glycerol, polypropylene oxide adducts of glycerol, and polypropylene oxide-polyethylene oxide-block adducts of glycerol; nitrogen-containing heterocyclic compounds, such as N-methyl-2-pyrrolidone, N-hydroxyethyl-2-pyrrolidone, 1,3-dimethylimidazolidinone, $\epsilon$-caprolactam, and $\gamma$-butyrolactone; amides, such as formamide, N-methylformamide, and N,N-dimethylformamide; amines, such as monoethanolamine, diethanolamine, triethanolamine, monomethylamine, diethylamine, and triethylamine; sulfur-containing compounds, such as dimethyl sulfoxide, sulfolane, and thiodiethanol; and propylene carbonate and ethylene carbonate. They may be used alone or in combination of two or more thereof.

Among these many humectants, a humectant having a high boiling point is preferred in order to uniformly disperse the pigment and the resin with a disperser. Preferred examples thereof include polyhydric alcohols, such as ethylene glycol, propylene glycol, diethylene glycol, dipropylene glycol, triethylene glycol, polyethylene glycol, polypropylene glycol, glycerol, and polyethylene oxide adducts of glycerol.

The amount of the humectant added varies depending on a resin used in an aqueous ink and is preferably in the range of 10% to 300% by mass and more preferably 30% to 200% by mass with respect to the pigment.

(Anionic Group-Containing Resin)

The anionic group-containing resin (b) used in the present invention has the function of dispersing the pigment. The anionic group-containing resin (b) capable of finely coating surfaces of pigment particles by, for example, a production method described below is more preferably used.

The anionic group-containing resin (b) used in the present invention has an acid value of 60 to 300 mgKOH/g and preferably 100 to 180 mgKOH/g in view of dispersibility and long-term storage stability. An acid value of less than 60 may result in a reduction in hydrophilicity to reduce the dispersion stability of the pigment. An acid value exceeding 300 is more liable to cause the aggregation of the pigment and may result in a reduction in the water resistance of a printed article printed with the ink composition.

The anionic group-containing resin (b) has a mass-average molecular weight of 3000 to 50000, preferably 4000 to 40000, more preferably 5000 to 30000, and most preferably 5000 to 20000. The reason for a mass-average molecular weight of 3000 or more is that a lower molecular weight results in better initial dispersibility but a reduction in long-term storage stability, which is prone to cause difficulty in maintaining the dispersion stability of the pigment. A mass-average molecular weight exceeding 50000 is prone to cause not only an increase in the viscosity of an aqueous pigment dispersion but also a reduction in the ejection properties of ink. In particular, it is possible to achieve the stability and the ejection properties of the ink composition at a mass-average molecular weight of 5000 to 20000.

The anionic group-containing resin preferably has a glass transition point of 90°C to 150°C and more preferably 100°C to 150°C. A glass transition point of 90°C or higher results in improvement in the thermal stability of the aqueous ink. In the case where the aqueous ink for inkjet recording produced from the aqueous pigment dispersion is used for inkjet recording by a thermal jet method, the property change such that ejection failure is caused by repeated heating does not easily occur, which is preferred.

The glass transition point of the anionic group-containing resin (b) in the present invention is a calculated value obtained from glass transition points of homopolymers of vinyl monomers constituting the resin on the basis of the Fox equation. The glass transition points of the homopolymers are described in "Introduction to Synthetic Resin for Coating", Kyozo Kitaoka, first edition, 7th printing, December 10, 1984, pages 168 and 169.

The anionic group-containing resin (b) used in the present invention is preferably a resin that may be water-dispersible by the neutralization of the anionic group and that is capable of forming stable water-dispersible particles under the action of a basic compound serving as a neutralizer without using a dispersion stabilizer.

The anionic group-containing resin (b) used in the present invention may be selected from, for example, polyester resins, epoxy resins, urethane resins, and vinyl copolymers, such as acrylic acid-based resins, maleic acid-based resins, styrene-based resins, and polyvinyl acetate resins, which contain functional groups, such as a carboxy group, a sulfo group, and a phosphate group.

Among these resins, in particular, a vinyl-based copolymer prepared by the reaction of an anionic group-containing vinyl monomer component and a hydrophobic group-containing vinyl monomer component is preferred. Examples of the anionic group include functional groups, such as a carboxy group, a sulfo group, and a phosphate group. A carboxy group-containing resin is preferred because of its better dispersion stability and long-term storage stability.

Examples of the carboxy group-containing vinyl monomer component contained in the vinyl-based copolymer include acrylic acid, methacrylic acid, itaconic acid, and crotonic acid.

Examples of the hydrophobic group-containing vinyl monomer component used to prepare the vinyl-based copolymer by polymerization include alkyl (meth)acrylates, such as methyl (meth)acrylate and ethyl (meth)acrylate; aryl (meth)acrylates or aralkyl (meth)acrylates, such as phenyl (meth)acrylate, benzyl (meth)acrylate, and phenylethyl (meth)acrylate; unsaturated fatty acid amides, such as acrylamide, methylacrylamide, methacrylamide, and maleamide; unsaturated nitriles, such as acrylonitrile and methacrylonitrile; unsaturated ethers, such as ethyl vinyl ether and butyl vinyl ether; unsaturated hydrocarbons, such as ethylene, propylene, 1-butene, 1-octene, and vinylcyclohexane; unsaturated halogenated hydrocarbons, such as vinyl chloride, vinylidene chloride, and tetrafluoroethylene; and styrene-based monomers, such as styrene, $\alpha$-methylstyrene, and vinyltoluene.

The vinyl-based copolymer is preferably a styrene-based resin prepared from a styrene-based monomer serving as the hydrophobic group-containing vinyl monomer component. With respect to the amount of the styrene-based monomer, which is a hydrophobic group-containing vinyl monomer, contained in the styrene-based resin, the styrene-based monomer component content is 50% by mass or more and preferably 70% by mass or more, and preferably 95% by mass or less in view of dispersion stability and long-term storage stability. When the styrene-based monomer component content of the copolymer resin is 50% by mass or more, the hydrophobicity of the copolymer resin is increased; hence, the pigment is more strongly coated with the resin in an aqueous system, thereby improving the ejection stability and achieving high print density. Furthermore, this is effective in improving the durability of a printed coating film on a recording medium. A styrene-based monomer component content exceeding 95% by mass results in a reduction in the proportion of the anionic group-containing monomer component that contributes to dispersion. This may reduce the dispersion stability and the long-term storage stability in an aqueous system.

In particular, a styrene-acrylic-based resin prepared from acrylic acid or methacrylic acid serving as the anionic group-containing vinyl monomer is preferably used as the styrene-based resin in view of the dispersion stability and the long-term storage stability of the aqueous pigment dispersion and ink composition for inkjet recording.

When the styrene-acrylic-based resin, which is a copolymer resin, is prepared from three or more vinyl monomer components including acrylic acid and methacrylic acid that serve as the carboxy group-containing vinyl monomers, the random copolymerizability is advantageously improved during resin synthesis, thereby enhancing the uniformity of the resin.

As the basic compound (d) that neutralizes the anionic group of the anionic group-containing resin, inorganic basic compounds and organic basic compounds may be used. Inorganic basic compounds are more preferred because the basic strength is easily adjusted. Examples of organic basic compounds include amines. Common amines, such as methylamine, dimethylamine, trimethylamine, ethylamine, diethylamine, triethylamine, diethanolamine, and triethanolamine are exemplified. Amines may be used as they are because they are generally liquid. Examples of inorganic basic compounds include hydroxides of alkali metals, such as potassium and sodium, and ammonium hydroxide. In particular, strongly basic compounds are preferred because they are effective in neutralizing the anionic group-containing resin to increase the dispersion stability of the pigment. Specifically, hydroxides of alkali metals, such as potassium hydroxide and sodium hydroxide, are preferred. Such an inorganic basic compound is generally used in the form of an aqueous solution with a concentration of about 20% to 50% by mass from the viewpoint of, for example, improving miscibility.

The amount of the basic compound (d) added is set in such a manner that the degree of neutralization of the anionic group-containing resin is 50% or more and preferably 80% or more from the viewpoint of improving the dispersion rate, the dispersion stability, and the long-term storage stability in a water-soluble solvent. The upper limit is not particularly limited. Substantially, the upper limit is 200% or less and preferably 120% or less in order to maintain the dispersion stability without gelation during long-term storage. Before the basic compound (d) is dispersed together with the pigment and the resin, the basic compound (d) is preferably mixed, in one step, with other components to be contained in the pigment dispersion, thereby preparing a dispersion. For example, the dispersion may also be prepared by a plurality of steps of, for example, mixing the anionic group-containing resin, water, and the basic compound to form a resin solution and adding the resin solution to another mixing component, such as the pigment. However, the procedure of preparing the dispersion by mixing the basic compound and the other mixing components in one step is preferred from the viewpoint of achieving the efficient progress of the adsorption of the resin on surfaces of pigment particles. The term "the degree of neutralization" refers to a value calculated from the expression described below.

[Math. 1]

$$\text{Degree of neutralization} = \frac{(\text{mass of basic compound}) \times 56.11 \times 1000}{(\text{acid value of resin}) \times (\text{equivalent of basic compound}) \times (\text{amount of resin})} \times 100$$

As a method for producing the ink composition for inkjet recording from the foregoing raw materials, a method may be employed in which an aqueous pigment dispersion containing the pigment (a), the anionic group-containing resin (b), the humectant (c), and the basic compound (d) is prepared and then the ink composition for inkjet recording is produced from the aqueous pigment dispersion.

(Production of Aqueous Pigment Dispersion)

To prepare the aqueous pigment dispersion used for the ink composition for inkjet recording according to the present invention, the pigment (a), the anionic group-containing resin (b), and the humectant (c) may be dispersed in the presence of the basic compound (d) with a commonly known disperser. Examples of the disperser include ultrasonic homogenizers, paint shakers, ball mills, roll mills, sand mills, sand grinders, DINO-MILL, DISPERMAT, SC MILL, SPIKE MILL, and NANOMIZER.

A dispersion step may be performed by preparing a mixture having the same composition as the aqueous pigment dispersion and dispersing the pigment and the resin in the mixture with the disperser to produce the aqueous pigment dispersion. To produce the aqueous pigment dispersion having satisfactory dispersion properties, a mixture containing the pigment, the anionic group-containing resin, the humectant, and the basic compound is preferably subjected to a kneading step, which is a pretreatment step, of producing a colored mixture that is in the form of a solid at ordinary temperature before the dispersion step.

Kneading is performed under high shearing force in the kneading step, thereby pulverizing the pigment. The anionic group-containing resin swollen by the addition of the humectant and the basic compound is pressed against surfaces of the pulverized particles, thereby allowing the coating of the pigment surfaces to proceed. This results in the production of a colored kneaded mixture in the form of a solid at ordinary temperature, the mixture containing the uniformly dispersed pigment. In particular, in the case where the anionic group-containing resin is a styrene-acrylic-based resin and where the proportion of the styrene-based monomer in all constituent monomers is 50% by mass or more, the resin has a very good affinity for the pigment, thus resulting in a satisfactory coating of the pigment with the resin. This improves the dispersion stability of the aqueous pigment dispersion, and gloss, durability and basic recording properties on plain paper, such as water resistance, of a printed image formed of an aqueous ink for inkjet recording prepared from the aqueous pigment dispersion. Furthermore, the image recording density is increased.

To satisfactorily perform the kneading step by applying high shearing force to the mixture, the mixture to be kneaded preferably has a solid content of 50% to 80% by mass and more preferably 65% to 80% by mass. The proportion of the humectant added in the kneading step is preferably 30% to 100% by mass with respect to the pigment because it is possible to easily fuse the solid raw materials together and apply a sufficient shearing force to the mixture. The proportion of the resin used in the kneading step is preferably 5% to 50% by mass with respect to the pigment because the pigment surfaces are sufficiently coated with the resin and only a small amount of the resin unadsorbed on the pigment is present in an aqueous medium.

Examples of an apparatus used for the kneading step include roll mills, Henschel mixers, pressure kneaders, and planetary mixers. Apparatuses, such as Henschel mixers, pressure kneaders, and planetary mixers, each equipped with an impeller and a mixing tank that can be sealed are preferred because the solid content can be maintained during kneading and because a kneaded mixture in a satisfactory dispersion state is easily obtained. In particular, a planetary mixer is preferred because the use of the planetary mixer allows kneading treatment to be performed in a wide viscosity range.

In the case where the kneading step is performed before the dispersion step to disintegrate the pigment particles in the kneading step into fine particles and where surfaces of the disintegrated pigment particles are sufficiently coated, it is possible to produce the aqueous pigment dispersion by adding an aqueous medium to the solid colored kneaded mixture, mixing the resulting mixture, and optionally stirring and diluting the mixture. To achieve more satisfactory dispersion state in the aqueous dispersion medium, the foregoing disperser may further be used. In this case, the aqueous pigment dispersion having satisfactory properties can be produced by dispersion treatment for a short time because of the fine pigment particles and the satisfactory coating of the pigment particles with the resin.

In some cases, coarse particles that cannot be disintegrated are present and aggregated particles occur in the aqueous pigment dispersion for inkjet recording produced by the foregoing method because of, for example, changes in the properties of the raw materials, such as the pigment. The coarse particles may cause clogging of a nozzle of a printer to reduce the ink ejection properties. Thus, the coarse particles are preferably removed by a method, e.g., centrifugation or filtration, after the preparation of the aqueous pigment dispersion or the preparation of the ink.

(Production of Ink Composition for Inkjet Recording)

The ink composition may be produced by adding the polyolefin wax and the water-dispersible urethane resin to the aqueous pigment dispersion produced as described above and diluting the resulting mixture with water and a water-soluble solvent. The ink composition preferably has a pigment concentration of about 1% to about 10% by mass.

The water-soluble solvent with which the aqueous pigment dispersion is diluted preferably contains a water-soluble organic solvent because the water-soluble organic solvent contributes to the prevention of drying, the adjustment of the viscosity, and the adjustment of the concentration of the ink composition. Examples of the water-soluble organic solvent are similar to the examples of the humectant used in the aqueous pigment dispersion.

The incorporation of a water-soluble organic solvent permeable to a recording medium imparts permeability to the ink composition, which is preferred. The permeability of the ink composition is a property required to adjust the permeability of the ink composition to the recording medium and adjust the dot size on the recording medium. Examples of the water-soluble organic solvent having permeability include lower alcohols, such as ethanol and isopropyl alcohol; ethylene oxide adducts of alkyl alcohols, such as ethylene glycol hexyl ether and diethylene glycol butyl ether; and propylene oxide adducts of alkyl alcohols, such as propylene glycol propyl ether.

The ink composition may further contain, for example, a known additive in addition to the water-soluble solvent and the kneaded mixture for the aqueous pigment dispersion. Examples of the additive that may be contained include alkaline agents, pH modifying agents, surfactants, preservatives, chelating agents, plasticizers, antioxidants, and ultraviolet absorbers.

(Method for Forming Image)

Examples of an inkjet method that can be employed for the aqueous ink composition for inkjet recording produced as described above include, but are not particularly limited to, known inkjet methods, such as continuous ejection methods (e.g., a charge control method and a spray method) and drop-on-demand methods (e.g., a piezoelectric method, a thermal method, and an electrostatic abstraction method). In the case where the aqueous ink composition for inkjet recording is used in these inkjet methods, it is possible to perform extremely stable ink ejection and provide satisfactory gloss, scratch resistance, and rub resistance of a formed image.

EXAMPLES

(Preparation of Aqueous Pigment Dispersion)

A method for preparing an aqueous pigment dispersion used in the present invention will be described in detail below. The terms "part" and "%" indicate "part by mass" and "% by mass", respectively. Resins A to C used in examples are described below.

Only Preparation Example 2 and Examples 7 to 9 are according to the invention. The other Preparation Examples and Examples are for reference and/or comparison only.

Resin A: a resin having a monomer composition ratio of styrene to acrylic acid to methacrylic acid of 77/10/13 (mass ratio), a mass-average molecular weight of 8800, an acid value of 153 mgKOH/g, a melting point of 155°C, and a glass transition point (calculated value) of 104°C.

Resin B: a resin having a monomer composition ratio of styrene to acrylic acid to methacrylic acid of 77/10/13 (mass ratio), a mass-average molecular weight of 11000, an acid value of 153 mgKOH/g, a melting point of 160°C, and a glass transition point (calculated value) of 104°C.

Resin C: a resin having a monomer composition ratio of styrene to acrylic acid to methacrylic acid of 72/12/16 (mass ratio), a mass-average molecular weight of 9000, an acid value of 185 mgKOH/g, a melting point of 155°C, and a glass transition point (calculated value) of 105°C.

The melting point used here indicates a temperature at which the resin starts to melt, the temperature being observed when the melting point of the resin is measured with, for example, a melting point apparatus under normal pressure.

The following pigments were used to prepare aqueous pigment dispersions for use in aqueous ink compositions for inkjet recording in examples and comparative examples.

Cyan pigment (not according to the invention): FASTOGEN BLUE 5310SD (manufactured by DIC Corporation)

Yellow pigment (not according to the invention): Ink Jet Yellow 4GP (manufactured by Clariant (Japan) K.K.)

Magenta pigment (not according to the invention): Cromophtal Jet Magenta DMQ (manufactured by Ciba Japan K.K.)

Black pigment: Mitsubishi Carbon Black #2300 (manufactured by Mitsubishi Chemical Corporation)

Properties of polyolefin waxes used in the aqueous ink compositions for inkjet recording in examples and comparative examples are described below.

CHEMIPEARL W900: aqueous dispersion of low-density polyethylene wax, volume-average particle size: 680 nm, solid content: 40% by mass, ring and ball softening point: 132°C, density: 970 kg/m$^3$, pH: 11, viscosity: 300 mPa·s, manufactured by Mitsui Chemicals, Inc.

AQUACER 552: aqueous dispersion of high-density oxidized polyethylene wax, volume-average particle size: 90 nm, solid content: 35% by mass, melting point: 130°C, pH: 9, viscosity: 25 mPa·s, manufactured by BYK Japan KK.

PEM-17: aqueous dispersion of polyethylene wax, volume-average particle size: 40 nm or less, solid content: 40% by mass, melting point: 103°C, viscosity: 170 mPa·s, manufactured by San Nopco Ltd.

The following binder resins were used in the ink compositions in examples and comparative examples.

Polyurethane A (aqueous dispersion):

Dispersion of a urethane resin (solid content: 20%) neutralized with potassium hydroxide at a degree of neutralization of 100%, the urethane resin having a monomer composition ratio of isophorone diisocyanate to 2,2-dimethylolpropionic acid to polyoxytetramethylene ether glycol of 30/10/60 (mass ratio), a mass-average molecular weight of 42000, and an acid value of 41 mgKOH/g, and polyoxytetramethylene ether glycol having a hydroxyl acid of 110.

Joncryl 67:

Dispersion of acrylic resin (solid content: 20%) neutralized with potassium hydroxide at a degree of neutralization of 100%, the acrylic resin having a mass-average molecular weight of 12500, and an acid value of 213 mgKOH/g, manufactured by BASF.

(Preparation Example 1) Preparation of Aqueous Pigment Dispersion with Cyan Pigment

| | |
|---|---|
| Resin C | 8 parts |
| Cyan pigment | 27 parts |
| Diethylene glycol | 10 parts |
| Aqueous solution of 30% by mass potassium hydroxide | 5 parts |

The foregoing raw materials were charged into a 50-L planetary mixer PLM-V-50V (manufactured by Inoue Mfg., Inc). A jacket was heated. Kneading was performed at low speed (number of rotations: 21 rotations/min, number of revolutions: 14 revolutions/min) until the temperature of the contents reached 60°C. After the temperature of the contents reached 60°C, kneading was switched to high speed (number of rotations: 35 rotations/min, number of revolutions: 24 revolutions/min) and continued for 2 hours. Then a total of 100 parts of deionized water (ion-exchanged water) heated to 60°C was added to the kneaded mixture over a period of 2 hours, thereby preparing a liquid mixture containing the resin and the pigment.

The liquid mixture was subjected to treatment with a bead mill (Nano Mill NM-G2L, manufactured by Asada Iron Works Co., Ltd.) under conditions described below.

Disperser: Nano Mill NM-G2L (manufactured by Asada Iron Works Co., Ltd.)

Bead diameter: 0.3 mm, zirconia beads

Amount of beads charged: 85%

Cooling water temperature: 10°C

Number of rotations: 2660 rotations/min (peripheral speed of disk: 12.5 m/sec)

Liquid feed rate: 200 g/10 seconds

The liquid mixture passed through the bead mill was subjected to centrifugal treatment at 13000 G for 10 minutes and then filtration treatment with a filter having an effective pore size of 0.5 μm. The resulting filtered mixture was diluted with deionized water to prepare an aqueous pigment dispersion having a cyan pigment concentration of 15% by mass.

(Preparation Examples 2 to 4) Preparation of Aqueous Dispersions of Black, Magenta, and Yellow Pigments

Aqueous dispersions of color pigments were prepared as in Preparation Example 1, except that raw materials and compositions, which are expressed in units of parts by mass, described in Table 1 were used in place of the raw materials and the composition used in Preparation Example 1.

[Table 1]

(Table 1)

|  | Preparation example 1 | Preparation example 2 | Preparation example 3 | Preparation example 4 |
|---|---|---|---|---|
| Cyan pigment | 27 | - | - | - |
| Black pigment | - | 23 | - | - |
| Magenta pigment | - | - | 21 | - |
| Yellow pigment | - | - | - | 20 |
| Resin A | - | 7 | - | - |
| Resin B | - | - | 6 | 4 |
| Resin C | 8 | - | - | - |
| 30% KOH | 5 | 3 | 3 | 2 |
| Humectant | 10 | 15 | 9 | 13 |
| Deionized water | 160 | 134 | 127 | 105 |

(Preparation of Aqueous Ink Composition for Inkjet Recording)

Aqueous color ink compositions for inkjet recording were prepared from the aqueous color pigment dispersions prepared in Preparation Examples 1 to 4 so as to have compositions described in Tables 2 and 3. Here, the compositions described in Tables 2 and 3 are expressed in units of parts by mass. The amounts of the binder resins and the polyolefin waxes added are expressed in units of parts by mass of solid.

Here, the term "balance" used for the amount of deionized water added indicates that the amount of deionized water added is adjusted in such a manner that the total parts by mass of the raw materials is 100 parts by mass.

(Example 1)

| | |
|---|---|
| Triethylene glycol monobutyl ether | 5 parts |
| (TEGmBE, manufactured by Tokyo Chemical Industry Co., Ltd.) | |
| 2-Pyrrolidinone (manufactured by BASF) | 8 parts |
| Purified glycerol (manufactured by Kao Corp.) | 2 parts |
| Surfynol 440 (nonionic surfactant, manufactured by Air Products and Chemicals, Inc.) | |
| (2,4,7,9-Tetramethyl-5decyne-4,7diol) | 0.5parts |
| 1,2-Hexanediol (manufactured by Degussa) | 1 part |
| Triethanolamine (manufactured by Konishi Co., Ltd.) | 0.8 parts |
| MEGAFAC 444 (nonionic surfactant, manufactured by DIC Corporation) | |
| (oxide adduct of perfluoroalklylethylene) | 0.2 parts |
| Polyurethane A (solid) | 0.5 parts |
| AQUACER 552 (solid) | 1 part |
| Deionized water | balance |

The foregoing raw materials were charged into a 100-ml plastic bottle. The resulting mixture was stirred for 1 hour. Then 20 parts of the aqueous cyan pigment dispersion was added thereto. The mixture was stirred for another 1 hour to prepare an aqueous cyan ink composition for inkjet recording, the aqueous cyan ink composition having a pigment concentration of 3% by mass.

(Examples 2 to 9)

Aqueous color ink compositions for inkjet recording were prepared as in Example 1, except that raw materials and compositions described in Table 2 were used in place of the raw materials and the composition used in Example 1. Thereby, aqueous cyan ink compositions for inkjet recording were prepared in Examples 2 to 4. An aqueous yellow ink composition for inkjet recording was prepared in Example 5. An aqueous magenta ink composition for inkjet recording was prepared in Example 6. Aqueous black ink compositions for inkjet recording were prepared in Examples 7 to 9.

[Table 2]

(Table 2)

| | Example 1 | Example 2 | Example 3 | Example 4 | Example 5 | Example 6 | Example 7 | Example 8 | Example 9 |
|---|---|---|---|---|---|---|---|---|---|
| Aqueous cyan pigment dispersion | 20 | 20 | 20 | 20 | - | - | - | - | - |
| Aqueous yellow pigment dispersion | - | - | - | - | 20 | - | - | - | - |
| Aqueous magenta pigment dispersion | - | - | - | - | - | 20 | - | - | - |
| Aqueous black pigment dispersion | - | - | - | - | - | - | 20 | 20 | 20 |
| Polyurethane A | 0.5 | 1 | 2 | 1 | 0.5 | 1 | 2 | 1 | 1 |
| CHEMIPEARL W900 | - | 0.05 | 0.005 | 0.05 | | 0.02 | 0.005 | 0.2 | - |
| AQUACER 552 | 1 | 0.15 | - | - | 0.5 | - | 0.02 | - | 0.02 |
| TEGmBE | 5 | 5 | 5 | 5 | 5 | 5 | 5 | 5 | 5 |
| 2-Pyrrolidinone | 8 | 8 | 8 | 8 | 8 | 8 | 8 | 8 | 8 |
| Glycerol | 2 | 2 | 2 | 2 | 2 | 2 | 2 | 2 | 2 |
| Surfynol 440 | 0.5 | 0.5 | 0.5 | 0.5 | 0.5 | 0.5 | 0.5 | 0.5 | 0.5 |
| 1,2 Hexanediol | 1 | 1 | 1 | 1 | 1 | 1 | 1 | 1 | 1 |
| Triethanolamine | 0.8 | 0.8 | 0.8 | 0.8 | 0.8 | 0.8 | 0.8 | 0.8 | 0.8 |
| MEGAFAC 444 | 0.2 | 0.2 | 0.2 | 0.2 | 0.2 | 0.2 | 0.2 | 0.2 | 0.2 |
| Deionized water | balance | balance | balance | balance | balance | balance | balance | balance | balance |

(Comparative Examples 1 to 5)

Aqueous cyan ink compositions for inkjet recording according to Comparative Examples 1 to 5 were prepared as in Example 1, except that raw materials and compositions described in Table 3 were used.

[Table 3]

(Table 3)

| | Comparative Example 1 | Comparative Example 2 | Comparative Example 3 | Comparative Example 4 | Comparative Example 5 |
|---|---|---|---|---|---|
| Aqueous cyan pigment dispersion | 20 | 20 | 20 | 20 | 20 |
| Polyurethane A | - | 1 | - | - | - |
| PEM-17 | - | - | - | 1 | - |
| Joncryl-67 | - | - | - | - | 1 |
| CHEMIPEARL W900 | - | - | 0.05 | 0.05 | 0.05 |
| TEGmBE | 5 | 5 | 5 | 5 | 5 |
| 2-Pyrrolidinone | 8 | 8 | 8 | 8 | 8 |
| Glycerol | 2 | 2 | 2 | 2 | 2 |
| Surfynol 440 | 0.5 | 0.5 | 0.5 | 0.5 | 0.5 |
| 1,2 Hexanediol | 1 | 1 | 1 | 1 | 1 |
| Triethanolamine | 0.8 | 0.8 | 0.8 | 0.8 | 0.8 |
| MEGAFAC 444 | 0.2 | 0.2 | 0.2 | 0.2 | 0.2 |
| Deionized water | balance | balance | balance | balance | balance |

[Print Evaluation Test]

Print evaluation was performed with the ink compositions prepared in examples and comparative examples described above. For the print evaluation, a solid pattern was printed on photo paper (gloss) (HP Advanced Photo Paper, manufactured by Hewlett-Packard Company), which is specialized inkjet print paper, at a print duty of 100% with a commercially available thermal jet-type inkjet printer (Photosmart D5360, manufactured by Hewlett-Packard Company) to provide printed sheets for evaluation.

[Test Example 1] Evaluation of Gloss

Specular gloss at 20° ($G_{20}$) of each printed sheet for evaluation was measured with a gloss meter (Micro-Haze-Plus, manufactured by BYK-Gardner). The measurement was performed at three different measurement points for each printed sheet, and the mean value was determined. The gloss was evaluated on the basis of the calculated mean value according to evaluation criteria described below. Table 4 illustrates the evaluation results.

○: $G_{20} > 47.5$

△: $40 \geq G_{20} \geq 47.5$

×: $G_{20} < 40$

[Test Example 2] Scratch Resistance Immediately After Printing

The scratch resistance of each printed sheet for evaluation was evaluated. The printed portion of each printed sheet was strongly rubbed with fingernails when 1 minute elapsed after forming each printed sheet. In this test, the scratch resistance immediately after printing was measured by visually evaluating the degree of detachment of the colorant in a rubbed region of the printed portion. Evaluation criteria are described below. Table 4 illustrates the evaluation results.

○: No colorant is detached.

Δ: The colorant is slightly detached.

×: The colorant is almost entirely detached to expose a surface of the specialized paper serving as a recording medium.

[Test Example 3] Scratch Resistance After Lapse of 24 Hours

The printed portion of each printed sheet was strongly rubbed with fingernails when 24 hours elapsed after forming each printed sheet. In this test, the scratch resistance after a lapse of 24 hours was measured by visually evaluating the degree of detachment of the colorant in a rubbed region of the printed portion. Evaluation criteria are described below. Table 4 illustrates the evaluation results.

○: No colorant is detached.

Δ: The colorant is slightly detached.

×: The colorant is almost entirely detached to expose a surface of the specialized paper serving as a recording medium.

[Test Example 4] Rub Resistance

After a lapse of 24 hours, the printed portion of each printed sheet for evaluation was rubbed 50 times of reciprocating motion against BEMCOT (manufactured by Asahi Kasei Corp.) attached to a reciprocating rubber component of a rubbing tester (RUBBING TESTER, manufactured by Taihei Rika Kogyo Co., Ltd.) under a load of 500 g. Then the degree of detachment of the colorant in a rubbed region of the printed portion was visually evaluated. Evaluation criteria are described below. Table 4 illustrates the evaluation results.

○: No colorant is detached.

Δ: The colorant is slightly detached.

×: The colorant is almost entirely detached to expose a surface of the specialized paper serving as a recording medium.

[Table 4]

(Table 4)

| | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 | Comparative Example 5 |
|---|---|---|---|---|---|---|---|---|---|---|---|---|---|---|
| Polyurethane A | 0.5 | 1 | 2 | 1 | 0.5 | 1 | 2 | 1 | 1 | - | 1 | - | - | - |
| CHEMIPEARL W900 | - | 0.05 | 0.005 | 0.05 | - | 0.02 | 0.005 | 0.2 | - | - | - | 0.05 | 0.05 | 0.05 |
| AQUACER 552 | 1 | 0.15 | - | - | 0.5 | - | 0.02 | - | 0.02 | - | - | - | - | - |
| PEM-17 | - | - | - | - | - | - | - | - | - | - | - | - | 1 | - |
| Joncryl-67 | - | - | - | - | - | - | - | - | - | - | - | - | - | 1 |
| Cf (% by mass) × Df (nm) | 90 | 47.5 | 3.4 | 34 | 45 | 13.6 | 5.2 | 136 | 1.8 | - | - | - | 34 | 74 |
| Gloss | ○ | ○ | ○ | ○ | ○ | ○ | ○ | Δ | ○ | ○ | ○ | × | Δ | Δ |
| Scratch resistance immediately after printing | ○ | ○ | ○ | ○ | ○ | ○ | ○ | ○ | ○ | × | Δ | × | × | × |
| Scratch resistance after a lapse of 24 hours | ○ | ○ | ○ | ○ | ○ | ○ | ○ | ○ | ○ | × | Δ | ○ | ○ | ○ |
| Rub resistance | ○ | ○ | ○ - Δ | ○ | ○ | ○ | ○ | ○ | Δ | × | Δ | ○ | ○ | ○ |

In Table 4, the amounts of the binder resins and the polyolefin waxes added are expressed in terms of solid contents.

The printed sheets printed with the aqueous ink compositions for inkjet recording, each aqueous ink composition containing the water-dispersible urethane resin and the polyolefin wax, prepared in Examples 1 to 7 had satisfactory gloss, scratch resistance immediately after printing and after a lapse of 24 hours, and rub resistance. The satisfactory properties were maintained regardless of the type of pigment. Satisfactory scratch resistance, rub resistance, and gloss were achieved in each color region with the pigments corresponding to four basic colors.

Although the gloss in Example 8 (Cf × Df = 1.8) and the rub resistance in Example 9 (Cf × Df = 136) were reduced, they are practically satisfactory levels.

In Comparative Example 1, in which neither the water-dispersible urethane resin nor the polyolefin wax was contained, although the gloss was improved, the scratch resistance and the rub resistance were extremely insufficient. As described in Comparative Example 2, in the case where the aqueous ink composition for inkjet recording did not contain a polyolefin wax but contained polyurethane A serving as a water-dispersible urethane resin, the scratch resistance and the rub resistance were better than those in Comparative Example 1 but were still insufficient.

In Comparative Example 3, in which the polyolefin wax was contained but polyurethane A was not contained, irregularities due to the polyolefin wax resulted in a significant reduction in gloss. Furthermore, the scratch resistance immediately after printing was extremely insufficient. In Comparative Example 4, another type of polyolefin wax having a small particle size was added to Comparative Example 3. In Comparative Example 5, the resin other than the water-dispersible urethane resin was added to Comparative Example 3. In both cases, the surface properties were improved to increase the gloss. However, the scratch resistance immediately after printing was not improved and was insufficient.

Industrial Applicability

An ink composition for inkjet recording according to the present invention can serve as ink for industrial and consumer jet printers and can be used to form an image by printing, the image being excellent in gloss, scratch resistance, and rub resistance.

**Claims**

1. An aqueous ink composition for inkjet recording, comprising a pigment (a), an anionic group-containing resin (b), a humectant (c), and a basic compound (d), wherein the aqueous ink composition further contains a water-dispersible urethane resin (e) and a polyolefin wax (f), wherein the value of (Cf × Df) is in the range of 3 to 100, wherein Cf represents the polyolefin wax (f) content (percent by mass), and Df represents the volume-average particle size (nm), wherein the pigment (a) is carbon black, and wherein the water-dispersible urethane resin (e) is an anionic urethane resin prepared from an organic polyisocyanate, at least one polyol selected from polyester polyols, polyether polyols, and polycarbonate polyols each having a hydroxyl value of 10 to 350, and optionally a polyamine and/or a polyol having a molecular weight of 300 or less.

2. The aqueous ink composition for inkjet recording according to Claim 1, wherein the concentration of the pigment (a) is 1% to 10% by mass.

3. The aqueous ink composition for inkjet recording according to Claim 1 or 2, wherein the polyolefin wax (f) is a wax or a mixture of two or more waxes, wherein the wax and the two or more waxes are each produced by the polymerization of a monomer mainly containing one or two or more compounds selected from the group consisting of ethylene, propylene, and butylene.

4. The aqueous ink composition for inkjet recording according to Claim 1 or 2, wherein the polyolefin wax (f) is a wax or a mixture of two or more waxes, wherein the wax and the two or more waxes are each selected from the group consisting of polyethylene waxes, polypropylene waxes, polybutylene waxes, and modifications thereof.

5. The aqueous ink composition for inkjet recording according to Claim 1 or 2, wherein the polyolefin wax (f) has a volume-average particle size of 40 to 1000 nm.

6. The aqueous ink composition for inkjet recording according to Claim 1 or 2, wherein the water-dispersible urethane resin (e) content is in the range of 0.2% to 5% by mass.

7. The aqueous ink composition for inkjet recording according to Claim 1 or 2, wherein the polyolefin wax (f) has a melting point of 80°C or higher.

8. The aqueous ink composition for inkjet recording according to Claim 1 or 2, wherein the anionic group-containing resin (b) is a styrene-acrylic-based resin having an acid value of 60 to 300 mgKOH/g and a weight-average molecular weight of 3000 to 50000.

9. A method for producing an aqueous ink composition for inkjet recording, comprising a kneading step of kneading a mixture containing a pigment (a), a anionic group-containing resin (b), a humectant (c), and a basic compound (d) to form a solid colored kneaded mixture; adding an aqueous medium to the solid colored kneaded mixture and mixing the resulting mixture to prepare an aqueous pigment dispersion; adding a polyolefin wax and a water-dispersible polyurethane resin to the aqueous pigment dispersion; and diluting the aqueous pigment dispersion with water and a water-soluble solvent to produce an ink composition for inkjet recording, wherein the value of (Cf × Df) is in the range of 3 to 100, wherein Cf represents the polyolefin wax (f) content (percent by mass), and Df represents the volume-average particle size (nm), wherein the pigment (a) is carbon black, and wherein the water-dispersible urethane resin (e) is an anionic urethane resin prepared from an organic polyisocyanate, at least one polyol selected from polyester polyols, polyether polyols, and polycarbonate polyols each having a hydroxyl value of 10 to 350, and optionally a polyamine and/or a polyol having a molecular weight of 300 or less.

10. The method for producing an aqueous ink composition for inkjet recording according to Claim 9, wherein after the addition of the aqueous medium to the solid colored kneaded mixture and the mixing of the resulting mixture, a dispersion step is performed.

11. The method for producing an aqueous ink composition for inkjet recording according to Claim 9 or 10, wherein the solid colored kneaded mixture has a solid content of 50% to 80% by mass.

12. A method for forming an image by inkjet recording with the aqueous ink composition for inkjet recording according to Claim 1.

13. The method for forming an image by inkjet recording according to Claim 12, wherein color regions are formed by printing with inks containing pigments corresponding to four basic colors of cyan, magenta, yellow, and black, wherein each of the inks contains the pigment (a), the anionic group-containing resin (b), the humectant (c), the basic compound (d), the water-dispersible urethane resin (e), and the polyolefin wax (f), wherein as the pigment (a) corresponding to black, carbon black is used, and wherein the value of (Cf × Df) is in the range of 3 to 100, wherein Cf represents the polyolefin wax (f) content (percent by mass), and Df represents the volume-average particle size (nm).

**Patentansprüche**

1. Wässrige Tintenzusammensetzung zur Tintenstrahlaufzeichnung, umfassend ein Pigment (a), ein anionische Gruppen enthaltendes Harz (b), ein Feuchthaltemittel (c) und eine basische Verbindung (d), wobei die wässrige Tintenzusammensetzung außerdem ein wasserdispergierbares Urethanharz (e) und ein Polyolefinwachs (f) enthält, wobei der Wert von (Cf × Df) im Bereich von 3 bis 100 liegt, wobei Cf den Gehalt an Polyolefinwachs (f) (Massenprozent) darstellt und Df die volumenmittlere Partikelgröße (nm) darstellt, wobei das Pigment (a) Carbon Black ist und wobei das wasserdispergierbare Urethanharz (e) ein anionisches Urethanharz ist, das aus einem organischen Polyisocyanat, wenigstens einem Polyol, ausgewählt aus Polyesterpolyolen, Polyetherpolyolen und Polycarbonatpolyolen, von denen jedes eine Hydroxylzahl von 10 bis 350 hat, und gegebenenfalls einem Polyamin und/oder einem Polyol mit einem Molekulargewicht von 300 oder weniger hergestellt wurde.

2. Wässrige Tintenzusammensetzung zur Tintenstrahlaufzeichnung gemäß Anspruch 1, wobei die Konzentration des Pigments (a) 1 bis 10 Massen-% ist.

3. Wässrige Tintenzusammensetzung zur Tintenstrahlaufzeichnung gemäß Anspruch 1 oder 2, wobei das Polyolefinwachs (f) ein Wachs oder ein Gemisch von zwei oder mehr Wachsen ist, wobei das Wachs und die zwei oder mehr Wachse jeweils durch die Polymerisation eines Monomers, das hauptsächlich eine Verbindung oder zwei oder mehr Verbindungen, ausgewählt aus der Gruppe, bestehend aus Ethylen, Propylen und Butylen, enthält, hergestellt sind.

4. Wässrige Tintenzusammensetzung zur Tintenstrahlaufzeichnung gemäß Anspruch 1 oder 2, wobei das Polyolefinwachs (f) ein Wachs oder ein Gemisch aus zwei oder mehr Wachsen ist, wobei das Wachs und die zwei oder mehr Wachse jeweils ausgewählt sind aus der Gruppe, bestehend aus Polyethylenwachsen, Polypropylenwachsen, Polybutylenwachsen und Modifikationen davon.

5. Wässrige Tintenzusammensetzung zur Tintenstrahlaufzeichnung gemäß Anspruch 1 oder 2, wobei das Polyolefinwachs (f) eine volumenmittlere Partikelgröße von 40 bis 1000 nm hat.

6. Wässrige Tintenzusammensetzung zur Tintenstrahlaufzeichnung gemäß Anspruch 1 oder 2, wobei der Gehalt an wasserdispergierbarem Urethanharz (e) im Bereich von 0,2 bis 5 Massen-% liegt.

7. Wässrige Tintenzusammensetzung zur Tintenstrahlaufzeichnung gemäß Anspruch 1 oder 2, wobei das Polyolefinwachs (f) einen Schmelzpunkt von 80°C oder höher hat.

8. Wässrige Tintenzusammensetzung zur Tintenstrahlaufzeichnung gemäß Anspruch 1 oder 2, wobei das anionische Gruppen enthaltende Harz (b) ein Styrol-Acryl-basiertes Harz ist, das eine Säurezahl von 60 bis 300 mgKOH/g und ein gewichtsmittleres Molekulargewicht von 3000 bis 50000 hat.

9. Verfahren zur Herstellung einer wässrigen Tintenzusammensetzung zur Tintenstrahlaufzeichnung, umfassend einen Knetschritt des Knetens eines Gemisches, enthaltend ein Pigment (a), ein anionische Gruppen enthaltendes Harz (b), ein Feuchthaltemittel (c) und eine basische Verbindung (d), um ein festes gefärbtes geknetetes Gemisch zu bilden; Zugeben eines wässrigen Mediums zu dem festen gefärbten gekneteten Gemisch und Mischen des resultierenden Gemisches, um eine wässrige Pigmentdispersion herzustellen; Zugeben eines Polyolefinwachses und eines wasserdispergierbaren Polyurethanharzes zu der wässrigen Pigmentdispersion und Verdünnen der wässrigen Pigmentdispersion mit Wasser und einem wasserlöslichen Lösungsmittel, um eine Tintenzusammensetzung zur Tintenstrahlaufzeichnung herzustellen, wobei der Wert von (Cf × Df) im Bereich von 3 bis 100 liegt, wobei Cf den Gehalt an Polyolefinwachs (f) (Massenprozent) darstellt und Df die volumenmittlere Partikelgröße (nm) darstellt, wobei das Pigment (a) Carbon Black ist und wobei das wasserdispergierbare Urethanharz (e) ein anionisches Urethanharz ist, das aus einem organischen Polyisocyanat, wenigstens einem Polyol, ausgewählt aus Polyesterpolyolen, Polyetherpolyolen und Polycarbonatpolyolen, von denen jedes eine Hydroxylzahl von 10 bis 350 hat, und gegebenenfalls einem Polyamin und/oder einem Polyol mit einem Molekulargewicht von 300 oder weniger hergestellt wurde.

10. Verfahren zur Herstellung einer wässrigen Tintenzusammensetzung zur Tintenstrahlaufzeichnung gemäß Anspruch 9, wobei nach Zugabe des wässrigen Mediums zu dem festen gefärbten gekneteten Gemisch und Mischen des resultierenden Gemisches ein Dispersionsschritt durchgeführt wird.

11. Verfahren zur Herstellung einer wässrigen Tintenzusammensetzung zur Tintenstrahlaufzeichnung gemäß Anspruch 9 oder 10, wobei das feste gefärbte geknetete Gemisch einen Feststoffgehalt von 50 bis 80 Massen-% hat.

12. Verfahren zur Erzeugung eines Bildes durch Tintenstrahlaufzeichnung mit der wässrigen Tintenzusammensetzung zur Tintenstrahlaufzeichnung gemäß Anspruch 1.

13. Verfahren zur Erzeugung eines Bildes durch Tintenstrahlaufzeichnung gemäß Anspruch 12, wobei die Farbregionen durch Drucken mit Tinten, die Pigmente entsprechend den vier Grundfarben Cyan, Magenta, Gelb und Schwarz enthalten, gebildet werden, wobei jede der Tinten das Pigment (a), das anionische Gruppen enthaltende Harz (b), das Feuchthaltemittel (c), die basische Verbindung (d), das wasserdispergierbare Urethanharz (e) und das Polyolefinwachs (f) enthält, wobei als das Pigment (a), das Schwarz entspricht, Carbon Black verwendet wird, und wobei der Wert von (Cf × Df) im Bereich von 3 bis 100 liegt, wobei Cf den Gehalt an Polyolefinwachs (f) (Massenprozent) darstellt und Df die volumenmittlere Partikelgröße (nm) darstellt.

## Revendications

1. Composition d'encre aqueuse pour impression par jet d'encre, comprenant un pigment (a), une résine contenant des groupes anioniques (b), un agent de mouillage (c) et un composé basique (d),
dans laquelle la composition d'encre aqueuse contient en outre une résine d'uréthane dispersible dans l'eau (e) et une cire de polyoléfine (f), dans laquelle la valeur de (Cf x Df) est dans la plage de 3 à 100, dans laquelle Cf représente la teneur en cire de polyoléfine (f) (% en masse), et Df représente la taille des particules moyenne en volume (nm), dans laquelle le pigment (a) est du noir de carbone, et dans laquelle la résine d'uréthane dispersible dans l'eau (e) est une résine d'uréthane anionique préparée à partir d'un polyisocyanate organique, d'au moins un polyol choisi parmi les polyester-polyols, les polyéther-polyols et les polycarbonate-polyols ayant chacun un indice d'hydroxyle de 10 à 350, et éventuellement d'une polyamine et/ou d'un polyol ayant un poids moléculaire de 300 ou moins.

2. Composition d'encre aqueuse pour impression par jet d'encre selon la revendication 1, dans laquelle la concentration du pigment (a) est de 1 % à 10 % en masse.

3. Composition d'encre aqueuse pour impression par jet d'encre selon la revendication 1 ou 2, dans laquelle la cire de polyoléfine (f) est une cire ou un mélange de deux cires ou plus, dans laquelle la cire et les deux cires ou plus sont chacune produites par la polymérisation d'un monomère contenant principalement un ou deux composés ou plus choisis dans le groupe constitué par l'éthylène, le propylène et le butylène.

4. Composition d'encre aqueuse pour impression par jet d'encre selon la revendication 1 ou 2, dans laquelle la cire de polyoléfine (f) est une cire ou un mélange de deux ou plusieurs cires, dans laquelle la cire et les deux ou plusieurs cires sont chacune choisies dans le groupe constitué par les cires de polyéthylène, les cires de polypropylène, les cires de polybutylène et leurs modifications.

5. Composition d'encre aqueuse pour impression par jet d'encre selon la revendication 1 ou 2, dans laquelle la cire de polyoléfine (f) a une taille de particule moyenne en volume de 40 à 1000 nm.

6. Composition d'encre aqueuse pour impression par jet d'encre selon la revendication 1 ou 2, dans laquelle la teneur en résine d'uréthane dispersible dans l'eau (e) est dans la plage de 0,2 % à 5 % en masse.

7. Composition d'encre aqueuse pour impression par jet d'encre selon la revendication 1 ou 2, dans laquelle la cire de polyoléfine (f) a un point de fusion de 80°C ou plus.

8. Composition d'encre aqueuse pour impression par jet d'encre selon la revendication 1 ou 2, dans laquelle la résine contenant des groupes anioniques (b) est une résine à base de styrène-acrylique ayant un indice d'acide de 60 à 300 mgKOH/g et un poids moléculaire moyen en poids de 3000 à 50000.

9. Procédé de production d'une composition d'encre aqueuse pour impression par jet d'encre, comprenant une étape de malaxage consistant à malaxer un mélange contenant un pigment (a), une résine contenant des groupes anioniques (b), un agent de mouillage (c) et un composé basique (d) pour former un mélange malaxé coloré solide ; ajouter un milieu aqueux au mélange malaxé coloré solide et mélanger le mélange résultant pour préparer une dispersion aqueuse de pigment; ajouter une cire de polyoléfine et une résine de polyuréthane dispersible dans l'eau à la dispersion aqueuse de pigment; et diluer la dispersion aqueuse de pigment avec de l'eau et un solvant hydrosoluble pour produire une composition d'encre pour impression par jet d'encre, dans lequel la valeur de (Cf x Df) est dans la plage de 3 à 100,
dans lequel Cf représente la teneur en cire de polyoléfine (f) (% en masse) et Df représente la taille des particules moyenne en volume (nm), dans lequel le pigment (a) est du noir de carbone et dans lequel la résine d'uréthane dispersible dans l'eau (e) est une résine d'uréthane anionique préparée à partir d'un polyisocyanate organique, d'au moins un polyol choisi parmi les polyester-polyols, les polyéther-polyols et les polycarbonate-polyols ayant chacun un indice d'hydroxyle de 10 à 350, et éventuellement d'une polyamine et/ou d'un polyol ayant un poids moléculaire de 300 ou moins.

10. Procédé de production d'une composition d'encre aqueuse pour impression par jet d'encre selon la revendication 9, dans lequel, après l'addition du milieu aqueux au mélange malaxé coloré solide et le mélange du mélange résultant, une étape de dispersion est effectuée.

11. Procédé de production d'une composition d'encre aqueuse pour impression par jet d'encre selon la revendication 9 ou 10, dans lequel le mélange malaxé coloré solide a une teneur en matières solides de 50 à 80 % en masse.

12. Procédé de formation d'une image par impression par jet d'encre avec la composition d'encre aqueuse pour impression par jet d'encre selon la revendication 1.

13. Procédé de formation d'une image par impression par jet d'encre selon la revendication 12, dans lequel des régions de couleur sont formées par impression avec des encres contenant des pigments correspondant aux quatre couleurs de base cyan, magenta, jaune et noir, dans lequel chacune des encres contient le pigment (a), la résine contenant des groupes anioniques (b), l'agent de mouillage (c), le composé basique (d), la résine d'uréthane dispersible dans l'eau (e), et la cire de polyoléfine (f), dans lequel on utilise comme pigment (a) correspondant au noir, du noir de carbone, et dans lequel la valeur de (Cf x Df) est dans la plage de 3 à 100, dans lequel Cf représente la teneur en cire de polyoléfine (f) (% en masse), et Df représente la taille des particules moyenne en volume (nm).

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1849840 A1
- EP 1854853 A1
- WO 9810025 A1
- JP 2004043791 A

- JP 2000517370 A
- JP 2007277290 A
- JP 2004131586 A
- JP 2005336336 A

**Non-patent literature cited in the description**

- **KYOZO KITAOKA.** *Introduction to Synthetic Resin for Coating,* 10 December 1984, 168, , 169